# EUROPÄISCHE PATENTSCHRIFT

(11) **EP 3 067 272 B1**
(45) Veröffentlichungstag und Bekanntmachung des Hinweises auf die Patenterteilung: **27.09.2017**
(21) Anmeldenummer: 16151912.9
(22) Anmeldetag: 19.01.2016
(51) Int. Cl.: B64C 27/82

(54) **HECKROTORVORRICHTUNG EINES HELIKOPTERS**
TAIL ROTOR DEVICE OF A HELICOPTER
DISPOSITIF DE ROTOR ARRIERE D'UN HELICOPTERE

(30) Priorität: 09.03.2015 CH 3182015
(43) Veröffentlichungstag der Anmeldung: 14.09.2016
(73) Patentinhaber: Marenco Swisshelicopter AG, 8753 Mollis (CH)
(72) Erfinder: STUCKI, Martin, 8330 Pfäffikon (CH)
(74) Vertreter: Schneider Feldmann AG Patent- und Markenanwälte

(56) Entgegenhaltungen:
- EP-A1- 0 508 025
- US-A- 3 594 097
- US-A1- 2009 121 075

## Beschreibung

### Technisches Gebiet

Die vorliegende Erfindung beschreibt eine Heckrotorvorrichtung, befestigbar an einem Heckausleger eines Drehflüglers, insbesondere eines Helikopters, umfassend eine Ummantelung, die einen Luftströmungskanal mit einer Kanaltiefe in Richtung einer Kanalachse senkrecht zur Längsachse verlaufend und einen Kanalinnendurchmesser bildet, sodass in dem Luftströmungskanal ein Heckrotor mit einer Mehrzahl von Rotorblättern drehbar lagerbar ist, wobei die Ummantelung derart ausgestaltet ist, dass ihre Kanaltiefe im Längenverlauf der Ummantelung in die vom Heckausleger abgewandte Richtung verjüngt ausgestaltet ist.

### Stand der Technik

Kommerziell erhältlich sind Hubschrauber, welche neben einem Hauptrotor eine Heckrotorvorrichtung, an einem Heckausleger angeordnet aufweisen, wobei die Heckrotorvorrichtung freiliegend oder von einer Ummantelung umgeben ausgestaltet sein kann und zur Erzeugung lateralen Schubs eingesetzt wird, um dem durch den Hauptrotor hervorgerufenen Drehmoment entgegenzuwirken.

Im Folgenden geht es um die ummantelte Variante der Heckrotorvorrichtung, welche in unterschiedlichen Ausführungsformen bereits länger bekannt ist. Die Ummantelung der Heckrotorvorrichtung ist heute bei kleinen und mittleren Hubschrauber-Gewichtsklassen weit verbreitet, da nicht nur der Lärm sowie Vibrationen reduziert und eine verbesserte Anströmung eines Heckrotors als Teil der Heckrotorvorrichtung gewährleistet werden kann, sondern weil insbesondere Personen, sowie der Heckrotor selbst, durch die Ummantelung besser geschützt sind.

Des Weiteren weisen Heckrotorvorrichtung mit Ummantelung für gewöhnlich ein besseres Schub-Leistungsverhältnis auf. Dies ist auf die Reduktion der Heckrotorleistung zurückzuführen, da Blattspitzenverluste minimiert werden können und die Strahlkontraktion durch die Diffusorwirkung stromab vom Heckrotor unterbunden wird. Andererseits resultiert das bessere Verhältnis aus einem zusätzlichen Schubbeitrag, welcher durch die beschleunigte Strömung am Kanaleinlass generiert wird. Es wird entsprechend mehr Schub durch einen Heckrotor mit Ummantelung erreicht, als bei Verwendung eines freien Heckrotors, bei gleicher Leistungsaufnahme.

Aus der EP0508025 geht eine Heckrotorvorrichtung hervor, welche für Schwebeflugoperationen und Giermanöver bei unterschiedlichen Fluggeschwindigkeiten optimiert ist. An einem Heckausleger ist eine Heckrotorvorrichtung mit Ummantelung, einen Heckrotor umgebend angeordnet. Die Ummantelung bildet einen Luftströmungskanal, in welchem der Heckrotor gelagert ist. Eine Kanaltiefe T der Ummantelung in Richtung der Drehachse des Heckrotors ist derart gestaltet, dass die Wände der Ummantelung den Heckrotor vollumfänglich in Richtung der Drehachse des Heckrotors umgeben. Die Kanaltiefe T weist einen konstanten Wert auf und ist grösser ausgebildet, als die Tiefe des Heckrotors, sodass die Rotorblätter vollständig innerhalb des Luftströmungskanals liegen. Gemäss der EP0508025 wird eine Kanaltiefe zwischen 50 cm und 60 cm gewählt. Ein Antriebsstrang ist durch den Heckausleger bis zum Heckrotor geführt, womit der Heckrotor antreibbar ist. Wie in Figur 1 aus der EP0508025 erkennbar, ist der Heckrotordurchmesser D deutlich grösser, zwischen 120 cm und 135 cm, als die Kanaltiefe T gewählt. Wie aus dem Stand der Technik bekannt, wird üblicherweise ein Verhältnis (D/T) von Heckrotordurchmesser D zur Kanaltiefe T grösser 30% gewählt, wodurch ein gutes Schub-Leistungsverhältnis erreichbar ist.

Dieses Verhältnis beruht darauf, dass der Heckrotordurchmesser D von Grund auf nicht sehr gross gewählt wird, um den Hebelarm der im Heckbereich befindlichen Masse möglichst klein zu halten, sodass der Hubschrauberschwerpunkt im zulässigen Bereich eingegrenzt werden kann. Damit bei den kleinen Heckrotordurchmessern D der nötige Schub und die gute Effizienz erreicht werden kann, wird die Kanaltiefe T meist noch weiter erhöht und teils werden noch zusätzliche Statoren eingebaut, welche aus dem Drall der Strömung weiteren Schub gewinnen.

Diese Verbesserungsmassnahmen führen allerdings dahin, dass aufgrund der weiter vergrösserten Kanaltiefe T und damit verbunden einer grösseren Fläche der Kanalwände bzw. gesamten Ummantelungsfläche ein vergrösserter Formwiderstand des Hubschraubers im Vorwärtsflug generiert wird. Auch die Ausgestaltung von Statoren erhöht den resultierenden Lärmpegel eines ummantelten Heckrotors, sodass der Einsatz von Statoren zwar zielführend ist, um die Effizienz zu erhöhen, aber auf Kosten des Flugkomforts geht.

Um die Schubeffizienz zu erhöhen und dabei den Lärmpegel weiter zu erniedrigen wurde in der US4506849 eine Ummantelung in Form eines in Längsrichtung des Helikopters schmal ausgestalteten geschlossenen Ringes vorgestellt. Dieser Ring ist stromab, in Richtung der Kanalachse, welche senkrecht zur Längs- und Hochachse des Helikopters ausgerichtet ist, von den Rotorblättern bzw. deren Rotorblattebene angeordnet, sodass der Ring keine Ummantelung darstellt, da sich die Rotorblattebene nicht im Ring sondern stromauf davon befindet. Eigentlich kann nicht von einer Kanalbildung gesprochen werden. Diese eher exotische Lösung widerspricht dem bisherigen Vorgehen Ummantelungen mit möglichst grossen Kanaltiefen zu verwenden. und den Heckrotor von Kanalwänden umgeben in einem Kanalinnendurchmesser anzuordnen. Das Verhältnis (D/T) von Heckrotordurchmesser D zur Kanaltiefe T bei Verwendung eines derart schmalen Ringes liegt gemäss US4506849 etwa bei 12.5%. Durch Verwendung eines solchen Ringes als Ummantelung konnte die Strahlkontraktion verhindert und so eine erhöhte Effizienz verzeichnet werden. Allerdings konnten Vorteile nicht bei allen denkbaren Flugbedingungen erzielt werden, weshalb sich diese Art der Ummantelung wohl nicht kommerziell durchgesetzt hat.

Mitte der 1970er Jahre ist durch Clark, D. R., "ærodynamik Design Rationale for the Fan-in-Fin on the S-67 Helicopter", American Helicopter Society 31st Annual National Forum, Washington, D.C., May 13-15, 1975, eine andere Gestaltung einer äusserst kompakten Heckrotorvorrichtung eines Helikopters offenbart worden. Ein Heckrotor mit einem extrem kleinen Heckrotordurchmesser ist dort gezeigt, welcher von einer Ummantelung umgeben ist, welche radial unsymmetrisch ausgeführt ist, wobei die Breite der Ummantelung in negativer Längsachsenrichtung L nach hinten, von der Heckauslegerseite zum Ende der Ummantelung in Richtung der Längsachse L verjüngt ist. Die maximale Kanaltiefe lag bei den Versuchen in der Grössenordnung der Hälfte des Heckrotordurchmessers.

Damit ein geeigneter Luftwiderstand erreicht wird, wurden Einlauf- und Auslassradius, sowie die Aussengeometrie der Ummantelung optimiert. Aufgrund der sich verjüngenden und der sich stromab befindlichen, von aussen betrachtet, konkav gekrümmten Ummantelung konnte Gewicht eingespart werden, was als vorteilhaft erkannt worden ist. Die eher düsenartige Heckrotorvorrichtung konnte in der Praxis aber nicht bei allen Flugmanövern überzeugen, weshalb die eingeschlagene Entwicklungsrichtung nicht weiterverfolgt wurde. Das mögliche Potential der Formgebung der Ummantelung ist offensichtlich nicht erkannt worden und in den darauf folgenden Jahren wurde nach weiteren Gestaltungsformen für Ummantelungen bzw. von Heckrotorvorrichtungen gesucht. Diese Gestaltungen wiesen vor allem Ummantelungen mit möglichst grossen Kanaltiefen und symmetrisch geformten Mantelgehäusen auf. Diese Formgebungen gingen damit in eine andere Richtung, wobei die Ergebnisse aber auch nicht die angestrebten Vorteile erreichen konnten. Heckrotorvorrichtungen wurden auch in US3594097 und US2009/0121075 offenbart.

### Darstellung der Erfindung

Die vorliegende Erfindung hat sich zur Aufgabe gestellt eine Heckrotorvorrichtung eines Helikopters zu schaffen, bei dessen Betrieb die Vorwärtsflugeigenschaften verbessert sind und die Leistungsaufnahme des Hauptrotors reduziert ist.

Insgesamt kann bei Benutzung der Heckrotorvorrichtung aufgrund der Ummantelung der Gesamtenergieverbrauch des Helikopters reduziert werden, wobei die bekannten positiven Eigenschaften der Ummantelung, wie Schutz der Rotorblätter vor Kollisionen mit Fremdkörpern, Verbesserung des Schub-Leistungsverhältnisses und vor allem Geräuschunterdrückung bestehen bleiben.

Zur Lösung dieser Aufgabe wird ein Heckrotor mit vergleichsweise extrem grossem Heckrotordurchmesser, welcher mindestens fünfmal grösser als die Kanaltiefe ist und damit ein entsprechend grossem Kanalinnendurchmesser verwendet. Die Verjüngung der Ummantelung bzw. der Kanaltiefe in negativer Längsachsenrichtung, ausgehend von der Hubschraubernase in Richtung des Hecks im Verlaufe der Ummantelung in vom Hauptrotor abgewandter Richtung, ist dabei in einem definierten Verhältnis von Kanaltiefe zum Kanalinnendurchmesser bzw. dem Heckrotordurchmesser gewählt.

Zur optimalen Steigerung der Windfahnen- und Gierstabilität wird die Formgebung der Ummantelung mit einem Heckrotor, dessen Heckrotordurchmesser mindestens 1000 Millimeter beträgt, kombiniert.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine teilweise geschnitten dargestellte Ansicht einer Heckrotorvorrichtung gemäss Stand der Technik.
- Figur 2: zeigt eine Seitenansicht eines Helikopters mit erfindungsgemässer Heckrotorvorrichtung, während
- Figur 3: eine Perspektivansicht eines Heckauslegers mit daran befestigter Heckrotorvorrichtung zeigt.
- Figur 4a: zeigt eine Detailseitenansicht des Heckrotors mit Ummantelung von der Einlaufseite, während
- Figur 4b: eine Schnittansicht der Heckrotorvorrichtung, geschnitten entlang der Linie Y-Y aus Figur 4a zeigt.
- Figur 5: zeigt eine schematische Schnittansicht der Heckrotorvorrichtung.

### Beschreibung

Als Beispiel wird hier ein Helikopter 0 gezeigt, welcher eine Kabine K aufweist, von welcher ein Heckausleger 1 in Richtung Heck des Helikopters 0 ragt. Der Hauptrotor H wird von einem nicht näher dargestellten und erläuterten Antrieb angetrieben, wobei dieser Antrieb auch eine Heckrotorvorrichtung 2, welche an den Heckausleger 1 in Richtung der Längsachse L anschliesst, antreibt. Die Längsachse L bildet die Längsachse L des Helikopters 0 und der Heckrotorvorrichtung 2. Die Heckrotorvorrichtung 2 umfasst einen Heckrotor 21, welcher von einer Ummantelung 20 in einem geringen radialen Abstand beabstandet umhüllt ist. Da die Art des Antriebs des Hauptrotors H und des Heckrotors 21 in dieser Anmeldung keine entscheidende Rolle spielt und austauschbar ist, wird nicht näher darauf eingegangen.

Der Heckrotor 21 ist ausserhalb des Rotorkreises des Hauptrotors H angeordnet und erzeugt im Betrieb einen zur Längsachse L sowie Hochachse h senkrecht wirkenden Schub in Kanalachsenrichtung A, welchen man auch als horizontalen Schub bezeichnen kann, womit das Drehmoment aufgrund des Hauptrotors H ausgeglichen wird. Durch die den Heckrotor 21 umgebende Ummantelung 20 wird eine Heckrotorvorrichtung 2 in Form eines Mantelpropellers erreicht, wobei die Ummantelung 20 ein im Wesentlichen zylindrisch geformtes Mantelgehäuse 20 ist.

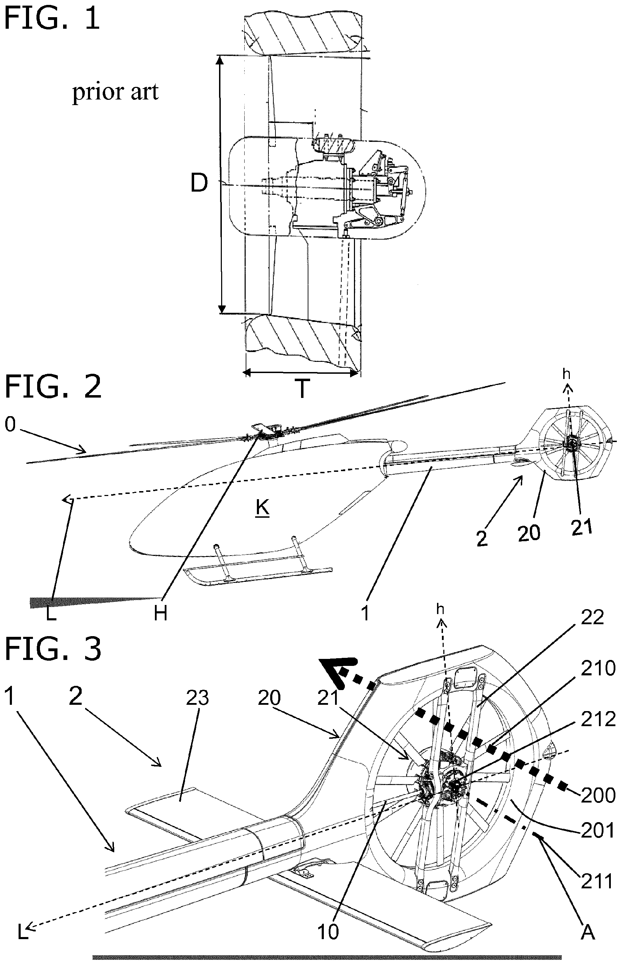

Wie in Figur 3 in der perspektivischen Detailansicht der Heckrotorvorrichtung 2 erkennbar, ist ein Höhenleitwerk 23 der Ummantelung 20 in Längsrichtung L dem Heckausleger 1 zugewandt vorgelagert. Auf die Darstellung eines vertikalen Stabilisators wurde hier aus Gründen der Übersichtlichkeit in den Abbildungen verzichtet.

Die Ummantelung 20 weist eine Mantelinnenwand 201 auf, welche einen Luftströmungskanal 200 mit einer Kanalachse A umgeben. Der Luftströmungskanal 200 ist senkrecht zur Hochachse h und zur Längsachse L verlaufend ausgestaltet. Die Richtung der durch den Luftströmungskanal 200 hindurchtretenden Luft im Betrieb ist mit dem gestrichelten Pfeil angedeutet. Innerhalb des Luftströmungskanals 200 gelagert und damit von der Ummantelung 20 in Richtung der Kanalachse A umgeben, ist der Heckrotor 21 angeordnet.

Der Heckrotor 21 weist eine Mehrzahl von Rotorblättern 210 auf und wird von zwei Tragstreben 22 ortsfest im Luftströmungskanal 200 beabstandet von den Mantelinnenwänden 201 gehalten. Die Rotorblätter 210 sind leicht in sich verwunden und können während des Betriebs unterschiedlich mittels einer Blattverstellung angestellt werden. Der Heckrotor 21 weist eine Drehachse 211 auf, welche parallel zur Kanalachse A, hier sogar identisch zur Kanalachse A angeordnet ist. Der Heckrotor 21 weist ein Drehlager 212 auf, an welchem ein Kutschenrad befestigt ist. An diesem Kutschenrad sind die Rotorblätter 210 mit dem Kutschenrad rotierbar montiert. Auf ein Heckrotorgetriebe und eine Steuervorrichtung zur Blattverstellung wird hier nicht näher eingegangen, der Fachmann kennt Lösungen dafür. Durch das Heckrotorgetriebe und die Steuervorrichtung zur Blattverstellung, werden die Rotorblätter 210 gesteuert rotiert und verstellt. Der Antrieb des Drehlagers 212 und damit der Rotorblätter 210 um die Drehachse 211 geschieht durch einen Antriebsstrang 10, welcher durch den Heckausleger 1 vom Antrieb zur Heckrotorvorrichtung 2 in negativer Längsachsenrichtung L geführt ist.

Die Ummantelung 20 bzw. die Mantelinnenwand 201 sind etwa torusförmig bzw. ringtorusförmig ausgebildet, wobei die Ummantelung 20 eine Länge U in Richtung Längsachse L aufweist und am Heckausleger 1 befestigt bzw. angeformt ist. Die Mantelinnenwand 201 ist teilweise gekrümmt ausgebildet.

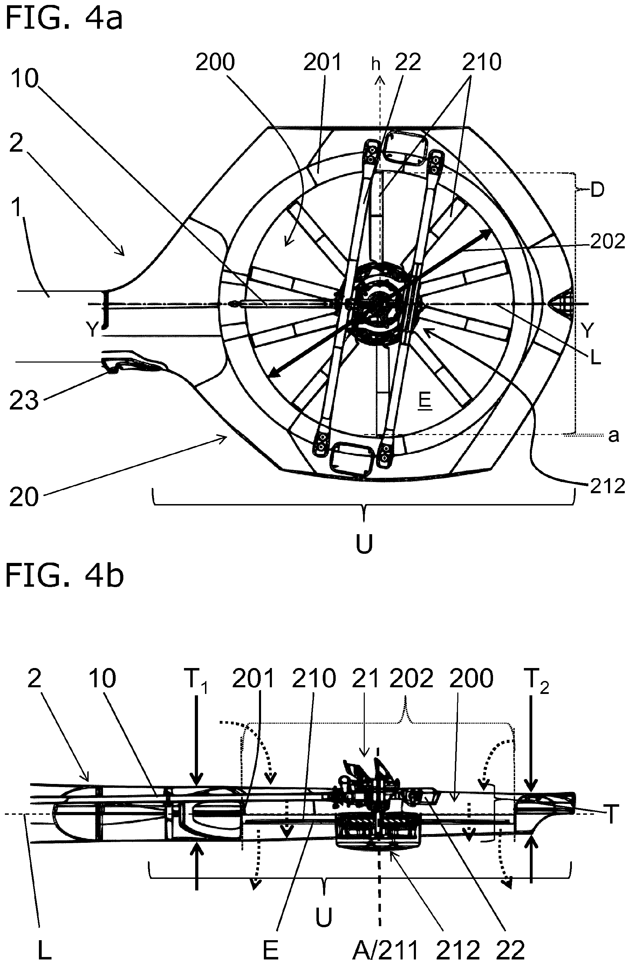

In der Seitenansicht ist im Wesentlichen ein Ring mit einer Öffnung zu erkennen, in welcher der Heckrotor 21 angeordnet ist. Diese Öffnung stellt den Luftströmungskanal 200 dar, welcher einen Luftdurchgang in einer Richtung senkrecht zur Hochachse h und zur Längsachse L und damit in Richtung Kanalachse A erlaubt. Die Seitenansicht gemäss Figur 4a zeigt eine Ansicht der Einlassseite der Ummantelung 20. Im Betrieb des Heckrotors 21 wird Luft durch diese Einlassseite durch den Luftströmungskanal 200 eingesaugt. Die Krümmung der Mantelinnenwand 201 auf der Einlassseite ist in der Seitenansicht gezeigt. Die Luft wird im Betrieb um diese gekrümmte Mantelinnenwand 201 durch den Heckrotor 21 angesaugt und durch den Luftströmungskanal 200 transportiert.

Der Kanalinnendurchmesser 202 ist um einen Abstand a grösser ausgestaltet, als der Heckrotordurchmesser D. Der Abstand a oder auch Blattspalt a sollte kleiner 0.5% des Heckrotordurchmessers D betragen, damit der Druckverlust im Luftströmungskanal 200 minimiert wird bzw. Verwirbelungen der Luft minimiert werden.

Hier sind zehn Rotorblätter 210 am Heckrotor 21 bzw. Kutschenrad angeordnet. Durch die zwei Tragstreben 22 wird der Heckrotor 21 gehalten, sodass die Rotorblätter 210 in einer festen Rotorblattebene E gehalten sind. Die Fläche der einzelnen Rotorblätter 210 bedeckt entsprechend einen Teil der Gesamtkanalfläche des Luftströmungskanals 200 in der Rotorblattebene E. Versuche haben gezeigt, dass eine Flächendichte, als Verhältnis zwischen der von den Rotorblättern 210 bedeckten Fläche zur Gesamtkanalfläche des Luftströmungskanals 200 zwischen 25% und 35% betragen sollte, um einen ausreichenden Heckrotorschub zu generieren.

In der Schnittansicht gemäss Figur 4b ist die Kanaltiefe mit T gekennzeichnet, wobei die Luftströmung in der Figur 4b von oben nach unten von der Einlassseite bis zu einer Auslassseite verläuft. Der Luftstrom durch den Luftströmungskanal 200 im Betrieb der Heckrotorvorrichtung 2 ist durch diverse gestrichelte Pfeile angedeutet. Die Kanaltiefe T verläuft in einer Richtung zur Kanalachse A bzw. der Drehachse 211 und damit senkrecht zur Hochachse h und Längsachse L. Die Kanaltiefe T wird durch die Länge der Mantelinnenwand 201 in Richtung Kanalachse A bestimmt und variiert hier im Verlauf der Länge U der Ummantelung in Richtung der Längsachse L, genauer in negativer Längsachsenrichtung L von der Kabine K weggerichtet. Von einer grösseren ersten Kanaltiefe T1 verjüngt sich die Kanaltiefe T bis zu einer zweiten kleineren Kanaltiefe T2 in Richtung der vom Heckausleger 1 abgewandten Seite der Ummantelung 20.

Wie die Variation verschiedener Parameter gezeigt hat, ist erstaunlicherweise ein positiver Effekt auf die Flugeigenschaften dann erreichbar, wenn eine Ummantelung mit einem möglichst grossen Kanalinnendurchmesser 202 und entsprechend grossem Heckrotordurchmesser D gewählt wird und die Verjüngung dabei in einem bestimmten Verhältnis der Kanaltiefen T1, T2 zum Kanalinnendurchmesser 202 ausgeführt ist.

Der Kanalinnendurchmesser 202 bzw. der darauf abgestimmte Heckrotordurchmesser D des Heckrotors 21 sind derart gewählt, dass ein Verhältnis zwischen der variablen Kanaltiefe T der Ummantelung 20 in negativer Längsachsenrichtung L zum Kanalinnendurchmesser 202 der Ummantelung 20 zwischen 20.5% und 14 % liegt. Entsprechend muss der Kanalinnendurchmesser 202 etwa mindestens fünfmal so gross gewählt sein, wie die grössere Kanaltiefe T1.

Obwohl bei Verjüngung des Mantelgehäuses 20 die Effizienz der Lateralschuberzeugung nicht so gross ist, wie bei Ummantelungen 20 mit konstanter möglichst grosser Kanaltiefe T, haben Versuche gezeigt, dass eine derartige Verjüngung vorteilhaft ist. Die kleinere Kanaltiefe T2 sollte aus Stabilitätsgründen aber nicht weiter reduziert werden, sodass das Verhältnis grösser gleich 14 % ist.

Die optimalen Ergebnisse, einen ausreichenden Schub in lateraler Richtung zu generieren, wurde eine Heckrotorvorrichtung 2 mit einer Ummantelung 20 mit einem Kanalinnendurchmesser 202 von 1208mm augestattet, wobei der Heckrotordurchmesser D gleich 1200 mm gewählt wurde. Wie Versuche gezeigt haben, sollte der Heckrotordurchmesser D und damit der Kanalinnendurchmesser 202 mindestens 1000 mm gross gewählt werden, damit eine ausreichend grosse Heckrotorfläche, zu einer guten Windfahnen- und Gierstabilität beitragen kann.

Die Kanaltiefe T variierte zwischen der ersten Kanaltiefe T1 von 245mm und der zweiten Kanaltiefe T2 von 175mm, sodass die Kanaltiefe T, in negativer Längsachsenrichtung L ausgehend von der Seite des Heckauslegers 1, nach hinten und damit weg vom Heckausleger 1 verjüngt ist und sich ein Verhältnis von Kanaltiefe T zum Kanalinnendurchmesser 202 von 14.48% bis 20.28% ergibt. Es wurde T2 immer grösser als T1/2 gewählt. Das Verhältnis der variablen Kanaltiefe T der Ummantelung 20 in Richtung Längsachse L zum Kanalinnendurchmesser 202 der Ummantelung 20 wurde zwischen 25% und 10 % gewählt und führte zu guten Ergebnissen.

Die Vorteile der beschriebenen Ausgestaltung der Heckrotorvorrichtung 2 sind einerseits, dass eine gute Windfahnen- und Gierstabilität generiert werden kann, durch einen grossen Heckrotordurchmesser D und andererseits, dass der Hauptrotor H während des Vorwärtsfluges weniger Leistung beziehen muss, weil der Formwiderstand der Heckrotorvorrichtung 2 im Vergleich zu bekannten tieferen Luftströmungskanälen bzw. kompakteren Heckrotorvorrichtungen geringer ist.

Wird zusätzlich ein Verhältnis des Heckrotordurchmessers D zum Durchmesser des Hauptrotors H zwischen 10 und 12 % gewählt, kann eine optimierte Schuberzeugung durch den Heckrotor 21 erreicht werden. Als besonders bevorzugt wurde ein Verhältnis D/Durchmesser des Hauptrotors H von 10.84% gewählt.

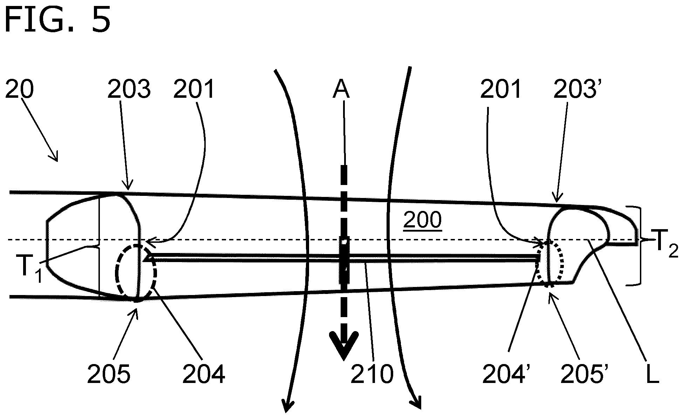

In Figur 5 ist nochmals eine schematische Schnittansicht durch die Ummantelung 20 und den innenliegenden Heckrotor 21 gezeigt. Die Mantelinnenwand 201 umgibt den Luftströmungskanal 200 vollständig, wobei die Mantelinnenwand 201 in ihrem Verlauf unterschiedliche Abschnitte und Krümmungen aufweist. Im Bereich eines Einlasses 203, 203', oben in Figur 5, hat die Mantelinnenwand 201 eine schwächere Krümmung, als am gegenüberliegenden Auslass 205. Auch die Krümmung am Einlass 203 in Höhe der grösseren Kanaltiefe T1 ist anders ausgestaltet als die Krümmung am Einlass 203' in Höhe der kleineren Kanaltiefe T2.

Im Bereich vor dem Auslass 205 in Richtung Kanalachse A stromab von der Rotorblattebene E, schliesst sich an die zylindrische Kanalform der Mantelinnenwand 201 ein Diffuserabschnitt 204, 204' an. Dieser ist leicht zur Kanalachse A abgewinkelt und gibt der austretenden Luftströmung eine gewünschte Richtung. Kurz vor Austritt passiert die Luftströmung dann den nahezu ungewölbten eher scharfkantigen Auslass 205, 205'. Während die Längen der Diffuserabschnitte 204, 204' auf der Seite der grösseren Kanaltiefe T1 und der kleineren Kanaltiefe T2 unterschiedlich ausgeführt sind, sind beide Auslässe 205, 205' gleich scharfkantig ausgebildet.

### Bezugszeichenliste

- 0: Helikopter
K Kabine
H Hauptrotor
L Längsachse
h Hochachse
- 1: Heckausleger
10 Antriebsstrang
- 2: Heckrotorvorrichtung
20 Ummantelung / Mantelgehäuse
200 Luftströmungskanal
201 Mantelinnenwand
202 Kanalinnendurchmesser (in Höhe Längsachse/senkrecht zur Drehachse)
T Kanaltiefe
T₁,T₂ Verjüngung der Kanaltiefe in Längsrichtung
U Länge Ummantelung
A Kanalachse
203 Einlass
204 Diffuserabschnitt
205 Auslass
- 21: Heckrotor (Drehvorrichtung/ Rotorblattaufhängung
210 Rotorblatt
E Rotorblattebene
D Heckrotordurchmesser (D<202)
211 Drehachse (koaxial in Kanal gehalten)
212 Drehlager
a Abstand/Blattspalt
- 22: Tragstreben
- 23: Höhenleitwerk

## Patentansprüche

1. Heckrotorvorrichtung (2), befestigbar an einem Heckausleger (1) eines Drehflüglers, insbesondere eines Helikopters (0), umfassend eine Ummantelung (20), die einen Luftströmungskanal (200) mit einer Kanaltiefe (T) in Richtung einer Kanalachse (A) senkrecht zur Längsachse (L) verlaufend und einen Kanalinnendurchmesser (202) bildet, sodass in dem Luftströmungskanal (200) ein Heckrotor (21) mit einer Mehrzahl von Rotorblättern (210) drehbar lagerbar ist, **dadurch gekennzeichnet, dass** die Ummantelung (20) derart ausgestaltet ist, dass ihre Kanaltiefe (T) im Längenverlauf der Ummantelung (20) in die vom Heckausleger (1) abgewandte Richtung verjüngt ausgestaltet ist, wobei die variable Kanaltiefe (T) immer kleiner als ein Viertel des Kanalinnendurchmessers (202) gewählt ist und
das Verhältnis der variablen Kanaltiefe (T) der Ummantelung in Richtung Längsachse (L) zum Kanalinnendurchmesser (202) der Ummantelung (20) zwischen 25% und 10 % liegt.

2. Heckrotorvorrichtung (2) nach Anspruch 1, wobei der Kanalinnendurchmesser (202) der Ummantelung (20) grösser als 1000 Millimeter, insbesondere grösser 1200 Millimeter gewählt ist.

3. Heckrotorvorrichtung (2) nach Anspruch 1 oder 2, wobei die erste Kanaltiefe (T1) kleiner 250 Millimeter und die zweite Kanaltiefe (T2) grösser 135 Millimeter gewählt ist.

4. Heckrotorvorrichtung (2) nach einem der vorhergehenden Ansprüche, wobei die zweite Kanaltiefe (T2) grösser als die Hälfte der ersten Kanaltiefe gewählt ist.

5. Heckrotorvorrichtung (2) nach einem der vorhergehenden Ansprüche, wobei die Flächendichte, als Verhältnis zwischen der von den Rotorblättern (210) bedeckten Fläche zur Gesamtkanalfläche des Luftströmungskanals (200) zwischen 25% und 35% liegt.

6. Heckrotorvorrichtung (2) nach einem der vorhergehenden Ansprüche, wobei der Blattspalt (a) zwischen Rotorblattspitzen und Mantelinnenwand (201) kleiner 0.5% des Heckrotordurchmessers (D) beträgt.

7. Heckrotorvorrichtung (2) nach einem der vorhergehenden Ansprüche, wobei ein Verhältnis des Heckrotordurchmessers (D) zum Durchmesser des Hauptrotors (H) zwischen 10 % und 12 % gewählt wird.

## Claims

1. A tail rotor device (2), which can be attached to a tail boom (1) of a rotary wing aircraft, in particular of a helicopter (0), encompassing a sheathing (20), which forms an air flow channel (200) with a channel depth (T) running in the direction of a channel axis (A) perpendicular to the longitudinal axis (L) and an inner channel diameter (202), so that a tail rotor (21) with a plurality of rotor blades (210) can be rotatably mounted in the air flow channel (200),
**characterized in that** the sheathing (20) is designed in such a way that its channel depth (T) in the longitudinal progression of the sheathing (20) tapers in the direction away from the tail boom (1), wherein the selected variable channel depth (T) is always smaller than one fourth of the inner channel diameter (202), and
the ratio between the variable channel depth (T) of the sheathing in the direction of the longitudinal axis (L) and the inner channel diameter (202) of the sheathing (20) lies between 25 % and 10 %.

2. The tail rotor device (2) according to claim 1, wherein the selected inner channel diameter (202) of the sheathing (20) is greater than 1000 millimeters, in particular greater than 1200 millimeters.

3. The tail rotor device (2) according to claim 1 or 2, wherein the selected first channel depth (T1) is less than 250 millimeters, and the second channel depth (T2) is greater than 135 millimeters.

4. The tail rotor device (2) according to one of the preceding claims, wherein the selected second channel depth (T2) is greater than half the first channel depth.

5. The tail rotor device (2) according to one of the preceding claims, wherein the surface density as a ratio between the surface covered by the rotor blades (210) and the overall channel surface of the air flow channel (200) lies between 25 % and 35 %.

6. The tail rotor device (2) according to one of the preceding claims, wherein the blade gap (a) between rotor blade tips and inner jacket wall (201) measures less than 0.5 % of the tail rotor diameter (D).

7. The tail rotor device (2) according to one of the preceding claims, wherein a ratio between the tail rotor diameter (D) and diameter of the main rotor (H) of between 10 % and 12 % is selected.

## Revendications

1. Dispositif de rotor arrière (2), pouvant être fixé sur une poutre de queue (1) d'un giravion, en particulier d'un hélicoptère (0), comprenant une enveloppe (20), qui forme un conduit d'écoulement d'air (200) avec une profondeur de conduit (T) en direction d'un axe de conduit (A) passant perpendiculairement à l'axe longitudinal (L) et un diamètre intérieur de conduit (202) de telle manière qu'un rotor arrière (21) avec une pluralité de pales de rotor (210) peut être logé pouvant tourner dans le conduit d'écoulement d'air (200), **caractérisé en ce que** l'enveloppe (20) est structurée de telle manière que sa profondeur de conduit (T) dans la configuration longitudinale de l'enveloppe (20) est structurée se réduisant dans la direction opposée à la poutre de queue (1),
la profondeur de conduit (T) variable étant toujours choisie plus petite qu'un quart du diamètre intérieur de conduit (202)
et
le rapport entre la profondeur de conduit variable (T) de l'enveloppe en direction de l'axe longitudinal (L) et le diamètre intérieur de conduit (202) de l'enveloppe (20) se situant entre 25 % et 10 %.

2. Dispositif de rotor arrière (2) selon la revendication 1, le diamètre intérieur de conduit (202) de l'enveloppe (20) étant choisi supérieur à 1000 millimètres, en particulier supérieur à 1200 millimètres.

3. Dispositif de rotor arrière (2) selon la revendication 1 ou 2, la première profondeur de conduit (T1) étant choisie inférieure à 250 millimètres et la deuxième profondeur de conduit (T2) supérieure à 135 millimètres.

4. Dispositif de rotor arrière (2) selon l'une quelconque des revendications précédentes, la deuxième profondeur de conduit (T2) étant choisie supérieure à la moitié de la première profondeur de conduit.

5. Dispositif de rotor arrière (2) selon l'une quelconque des revendications précédentes, la densité de surface, en tant que rapport entre la surface couverte par les pales du rotor (210) et la surface de conduit totale du conduit d'écoulement d'air (200), se situant entre 25 % et 35 %.

6. Dispositif de rotor arrière (2) selon l'une quelconque des revendications précédentes, l'interstice de pale (a) entre les pointes de pale de rotor et la paroi intérieure de l'enveloppe (201) étant inférieure à 0,5 % du diamètres de rotor arrière.

7. Dispositif de rotor arrière (2) selon l'une quelconque des revendications précédentes, un rapport entre le diamètre de rotor arrière (D) et le diamètre du rotor principal (H) étant choisi entre 10 % et 12 %
